(19)

Europäisches
Patentamt

European
Patent Office

Office européen
des brevets

(11) **EP 3 592 048 B1**

(12) **EUROPEAN PATENT SPECIFICATION**

(45) Date of publication and mention
of the grant of the patent:
**10.11.2021 Bulletin 2021/45**

(21) Application number: **18817491.6**

(22) Date of filing: **15.06.2018**

(51) Int Cl.:
*H04W 52/14* (2009.01)    *H04W 52/24* (2009.01)

(86) International application number:
**PCT/CN2018/091550**

(87) International publication number:
**WO 2018/228544 (20.12.2018 Gazette 2018/51)**

(54) **POWER DETERMINATION METHOD, DEVICE, AND SYSTEM**

LEISTUNGSBESTIMMUNGSVERFAHREN, -VORRICHTUNG UND -SYSTEM

PROCÉDÉ, DISPOSITIF, ET SYSTÈME DE DÉTERMINATION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2017 CN 201710459417**

(43) Date of publication of application:
**08.01.2020 Bulletin 2020/02**

(73) Proprietor: **Huawei Technologies Co., Ltd.
Longgang District
Shenzhen, Guangdong 518129 (CN)**

(72) Inventors:
  • **SUN, Wei
    Shenzhen
    Guangdong 518129 (CN)**
  • **GUO, Zhiheng
    Shenzhen
    Guangdong 518129 (CN)**
  • **XIE, Xinqian
    Shenzhen
    Guangdong 518129 (CN)**
  • **FEI, Yongqiang
    Shenzhen
    Guangdong 518129 (CN)**

(74) Representative: **Pfenning, Meinig & Partner mbB
Patent- und Rechtsanwälte
Theresienhöhe 11a
80339 München (DE)**

(56) References cited:
  **CN-A- 101 399 579     CN-A- 102 083 189
  CN-A- 106 102 150     US-A1- 2013 142 113
  US-A1- 2014 094 214**

  • HUAWEI ET AL: "Overview of NR UL for LTE-NR
    coexistence", 3GPP DRAFT; R1-1709383, 3RD
    GENERATION PARTNERSHIP PROJECT (3GPP),
    MOBILE COMPETENCE CENTRE ; 650, ROUTE
    DES LUCIOLES ; F-06921 SOPHIA-ANTIPOLIS
    CEDEX ; FRANCE , vol. RAN WG1, no. Hangzhou,
    China; 20170515 - 20170519 17 May 2017
    (2017-05-17), XP051285096, Retrieved from the
    Internet:
    URL:http://www.3gpp.org/ftp/tsg_ran/WG1_RL
    1/TSGR1_89/Docs/ [retrieved on 2017-05-17]
  • HUAWEI et al.: "Overview of NR UL for LTE-NR
    Coexistence", 3GPP TSG RAN WG1 Meeting #89
    R1-1709383, 19 May 2017 (2017-05-19),
    XP051285096,
  • HUAWEI et al.: "UL Power Control for Cross-link
    Interference Mitigation", 3GPP TSG RAN WG1
    Meeting #89 R1-1706912, 19 May 2017
    (2017-05-19), XP051272142,
  • SAMSUNG: "UL Power Control Aspects", 3GPP
    TSG RAN WG1 Meeting #88bis R1-1705363, 7
    April 2017 (2017-04-07), XP051243493,

EP 3 592 048 B1

## Description

This application claims priority to Chinese Patent Application No. 201710459417.8, filed with the Chinese Patent Office on June 16, 2017 and entitled "POWER DETERMINING METHOD, DEVICE, AND SYSTEM".

## TECHNICAL FIELD

Embodiments of the present invention relate to the field of communications technologies, and in particular, to a power determining method, device, and system.

## BACKGROUND

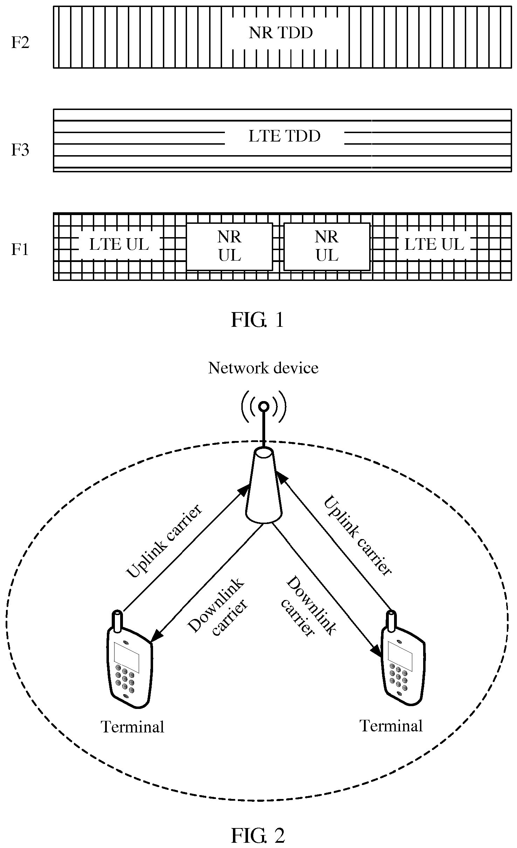

A 5th generation mobile communications (5th-generation, 5G) (also referred to as next generation radio (generation radio, NR)) system uses a most advanced mobile communications technology that can provide higher bandwidth and securer communication for a mobile user. To coexist with a current communications system (for example, a Long Term Evolution (long term evolution, LTE) system), the 5G system can share a frequency band resource with the LTE system. For example, as shown in FIG. 1, a terminal (user equipment, UE) in an LTE system performs downlink transmission by using an LTE frequency division multiple access (frequency division duplexing, FDD) downlink (downlink, DL) carrier F2, and UE in a 5G system performs downlink transmission by using a time division duplex (time division duplexing, TDD) carrier F3. For uplink transmission, both the terminal (user equipment, UE) in the 5G system and the UE in the LTE system may perform uplink transmission by using an LTE FDD uplink (uplink, UL) carrier F1, to share a frequency band resource.

However, because F1 and F3 are a pair of LTE FDD frequency spectrums, the UE in the LTE system may obtain a path loss on F3 through measurement by using an LTE downlink reference signal carried on F3, and the path loss may be used for F1. For the UE in the 5G system, because F3 is used to transmit only an LTE signal, the UE in the 5G system cannot identify F3 and therefore cannot obtain a path loss on F1 through measurement by using a reference signal on F3. Although 5G downlink reference information is carried on F2 and the UE in the 5G system may obtain a path loss on F2 through measurement by using the downlink reference information carried on F2, because a frequency of F1 is significantly different from a frequency of F2 and the path loss and a penetration loss on F1 are different from the path loss and a penetration loss on F2 in the 5G system, the path loss measured on F2 cannot be directly used for F1. Consequently, the UE in the 5G system cannot obtain the path loss on the uplink carrier F1, and therefore cannot calculate power for sending an uplink signal.

US 2013/142113 A1 discloses a path-loss estimation for uplink power control in a carrier aggregation environment. Therein, a component carrier list is received at a user equipment, where a component carriers grouped in the list have one or more common characteristics relative to the power necessary for uplink transmission on those component carriers. A path-loss estimation performed on the downlink of a component carrier in the component carrier list can, therefore, be used to control uplink transmission for other component carriers in the list. Additionally, a user equipment can receive a path-loss difference parameter providing an offset for one or more factors related to the power necessary for uplink transmission between a component carrier with certain characteristics relative to those factors and a component carrier with different characteristics relative to those same factors. The path-loss difference parameter can also be used to determine a path-loss estimation value for SCells in the component carrier list when each activated as an SCell has a signal quality that is greater than a selected threshold, possibly indicating too much interference.

XP051285096 is a 3GPP document that discloses an uplink power control method based on pathloss measurements.

## SUMMARY

Embodiments of the present invention provide a power determining method according to claim 1, a terminal according to claim 9, and a system according to claim 11, to resolve a problem of how to determine power for sending an uplink signal in a 5G system.

To achieve the foregoing objective, the following technical solutions are used in the embodiments of the present invention:

According to a first aspect, an embodiment of the present invention provides a power determining method, including:

receiving, by a terminal, a first offset value from a network device; and determining, based on receive power for receiving a downlink signal on a second carrier and the first offset value, power for sending an uplink signal on a first carrier, where

the first offset value is determined based on a penetration loss on the first carrier and a penetration loss on the second carrier, the first carrier is an uplink carrier of the terminal, and the second carrier is a TDD carrier or a downlink carrier of the terminal.

The downlink signal includes a downlink reference signal, and the power for receiving the downlink signal includes reference signal received power (reference signal received power, RSRP). The downlink signal may further include a downlink data signal.

In this way, when sending the uplink signal, in consideration of impact of the penetration loss on the power of the uplink signal, the terminal determines, based on the offset value related to the penetration loss, the power for sending the uplink signal, so that the power for sending the uplink signal is calculated based on a transmission environment of the terminal, to resolve a problem that power for sending an uplink signal cannot be calculated in an existing 5G system.

It should be noted that, in this embodiment of the present invention, the first offset value may be a difference between the penetration loss on the first carrier and the penetration loss on the second carrier; the uplink carrier may be a carrier carrying signaling or data sent by the terminal to the network device; the downlink carrier may be a carrier carrying data or signaling sent by the network device to the terminal; and the TDD carrier may be a carrier carrying, in different slots, data or signaling sent by the terminal to the network device and data or signaling sent by the network device to the terminal.

In this embodiment of the present invention, the first carrier may include a plurality of subcarriers. When the first carrier includes a plurality of subcarriers, the first offset value determined based on the penetration loss on the first carrier and the penetration loss on the second carrier may include a plurality of values in a one-to-one correspondence with the subcarriers.

With reference to the first aspect, only in the following several cases, the terminal determines, based on the receive power for receiving the downlink signal on the second carrier and the first offset value, the power for sending the uplink signal on the first carrier, for example:

when the receive power for receiving the downlink signal on the second carrier by the terminal is less than or equal to a first threshold, the terminal determines, based on the receive power for receiving the downlink signal on the second carrier and the first offset value, the power for sending the uplink signal on the first carrier; or

when a path loss for receiving the downlink signal on the second carrier by the terminal is less than or equal to a second threshold, the terminal determines, based on the receive power for receiving the downlink signal on the second carrier and the first offset value, the power for sending the uplink signal on the first carrier; or

when RSRP for receiving the downlink signal on the second carrier by the terminal is less than or equal to a third threshold, the terminal determines, based on the receive power for receiving the downlink signal on the second carrier and the first offset value, the power for sending the uplink signal on the first carrier.

Specific values of the first threshold, the second threshold, and the third threshold may be set as required. This is not limited in this embodiment of the present invention. Optionally, the first threshold, the second threshold, and the third threshold may be configured by the network device for the terminal.

A unit of the first threshold corresponds to a unit of the power for receiving the downlink signal. When the receive power that is for receiving the downlink signal on the second carrier and that is obtained by the terminal through measurement is less than or equal to the first threshold, it indicates that a condition for transmission between the terminal and the access network device is relatively poor, and the terminal is an indoor user. A unit of the second threshold corresponds to a unit of the path loss. When the path loss for receiving the downlink signal on the second carrier by the terminal is less than or equal to the second threshold, it indicates that a condition for transmission between the terminal and the access network device is relatively poor, and the terminal is an indoor user. A unit of the third threshold corresponds to a unit of the RSRP for the downlink reference signal. When the RSRP for receiving the downlink signal on the second carrier by the terminal is less than or equal to the third threshold, it indicates that a condition for transmission between the terminal and the access network device is relatively poor, and the terminal is an indoor user.

In addition, a manner of determining that the terminal is an indoor terminal includes but is not limited to the foregoing manners, and may be alternatively another implementation. For example, the network device may determine, based on the reference signal received power reported by the terminal, that the terminal is an indoor terminal or an outdoor terminal, and notify the terminal of a determining result, so that the terminal determines, based on the notified result, to determine, based on the path loss on the second carrier and the first offset value, the power for sending the uplink signal on the first carrier.

With reference to the foregoing possible implementation, in a possible implementation, the determining, by the terminal based on receive power for receiving a downlink signal on the second carrier and the first offset value, power for sending an uplink signal on the first carrier may include:
determining, by the terminal based on the path loss on the second carrier and the first offset value, the power for sending the uplink signal on the first carrier, where the path loss on the second carrier is determined by the terminal based on the receive power for receiving the downlink signal on the second carrier.

With reference to the foregoing possible implementation, in a possible implementation, the determining, by the terminal based on the path loss on the second carrier and the first offset value, the power for sending the uplink signal on the first carrier may include:

determining, by the terminal, a path loss on the first carrier based on the path loss on the second carrier and the first offset value, and determining, based on the path loss on the first carrier, the power for sending the uplink signal on the first carrier.

The terminal may calculate the path loss on the first carrier in the following two manners:

using, as the path loss on the first carrier, a result obtained by adding the path loss on the second carrier, the first offset value, and a second offset value, where the second offset value is a difference between the path loss on the first carrier and the path loss on the second carrier; or
when the second offset value is used to configure an uplink power control parameter for the first carrier, directly using, by the terminal as the path loss on the first carrier, a result obtained by adding the path loss on the second carrier and the first offset value.

After calculating the path loss on the first carrier, the terminal may determine, according to an existing power control calculation formula based on the path loss on the first carrier and a power control parameter configured by the network device, the power for sending the uplink signal on the first carrier, where a value unit of the power is dBm.

In this way, the terminal can calculate, with reference to the existing power control formula and the determined uplink path loss, the power for sending the uplink signal. The existing power control formula is described in the description of embodiments.

With reference to the first aspect and the foregoing possible implementation, in a possible implementation, the determining, by the terminal based on the path loss on the second carrier and the first offset value, the power for sending the uplink signal on the first carrier may alternatively include:

determining, by the terminal according to the following Formula 1 or Formula 2, the power $P$ for sending the uplink signal on the first carrier:

Formula 1: $$P = \min\{P_{\max}, FUNCTION(M, P_0, \Delta, f) + \alpha \cdot PL + offset\}$$ ;

and

Formula 2: $$P = \min\{P_{\max}, FUNCTION(M, P_0, \Delta, f) + \alpha \cdot PL + \alpha \cdot offset\}$$ ,

where

in Formula 1 and Formula 2, *offset* is the first offset value;
*PL* is determined based on the path loss on the second carrier, *PL* is the path loss on the second carrier or *PL* is a result obtained by adding the path loss on the second carrier and a second offset value, the path loss on the second carrier is determined by the terminal based on the receive power for receiving the downlink signal on the second carrier, and the second offset value is determined based on a path loss on the first carrier and the path loss on the second carrier;
$P_{\max}$ is maximum transmit power of the terminal on the first carrier;
$FUNCTION(M, P_0, \Delta, f)$ is a function related to $M$, $P_0$, $\Delta$, $f$ in uplink power control, M is a quantity of resource blocks occupied by the terminal to send the uplink signal on the first carrier, $P_0$ is a power control parameter that is related to target receive power and that is obtained by the terminal from the network device, $\Delta$ is a power control parameter that is related to a coding and modulation scheme and that is obtained by the terminal from the network device, and $f$ is a power control parameter that is related to a power command and that is obtained by the terminal from the network device; and
$\alpha$ is a power control parameter that is related to path loss compensation and that is obtained by the terminal from the network device.

In this way, the terminal can directly calculate, based on the first offset value, the power for sending the uplink signal, without first calculating the uplink path loss and then calculating, based on the uplink path loss, the power for sending the uplink signal, thereby reducing calculation complexity of the terminal.

Optionally, in this embodiment of the present invention, for different uplink signals, the function *FUNCTION(M,P₀,Δ,f)* has different representation forms. For example, for a physical uplink shared channel (physical uplink shared channel, PUSCH), *FUNCTION(M,P₀,Δ,f)* is:

$$10\log_{10}(M_{\text{PUSCH,c}}(i)) + P_{\text{O\_PUSCH,c}}(j) + \Delta_{\text{TF,c}}(i) + f_c(i)$$ ;

for a sounding reference signal (sounding reference signal, SRS), *FUNCTION(M,P₀,Δ,f)* is:

$$10\log_{10}(M_{\text{SRS,c}}) + P_{\text{O\_SRS,c}}(m) + f_{SRS,c}(i)$$ ;

or

$$10\log_{10}(M_{\text{SRS,c}}) + P_{\text{O\_PUSCH,c}}(j) + f_c(i)$$ ;

and for a physical uplink control channel (physical uplink control channel, PUCCH), *FUNCTION(M,P₀,Δ,f)* is:

$$P_{0\_\text{PUCCH}} + h\left(n_{CQI}, n_{HARQ}, n_{SR}\right) + \Delta_{\text{F\_PUCCH}}(F) + \Delta_{TxD}(F') + g(i)$$ ,

where in the foregoing formulas, i is a subframe number, c is a carrier number, $P_{\text{CMAX,c}}(i)$ is maximum transmit power of the gNB, $M_{\text{PUSCH,c}}(i)$ is a quantity of PUSCHs on a $c^{\text{th}}$ carrier of an $i^{\text{th}}$ subframe, $P_{\text{O\_PUSCH,c}}(j)$ is target receive power, $\Delta_{\text{TF,c}}(i)$ is an adjustment value related to a modulation scheme, and $f_c(i)$ is a power control factor.

With reference to the first aspect, in a possible implementation, the method may further include: when the receive power for receiving the downlink signal on the second carrier by the terminal is greater than a first threshold, or when a path loss for receiving the downlink signal on the second carrier by the terminal is greater than a second threshold, or when RSRP for receiving the downlink signal on the second carrier by the terminal is greater than a third threshold, determining, by the terminal based on the path loss on the second carrier, the power for sending the uplink signal on the first carrier.

In this way, when the receive power that is for receiving the downlink signal on the second carrier and that is obtained by the terminal through measurement is greater than the first threshold, or when the path loss for receiving the downlink signal on the second carrier by the terminal is greater than the second threshold, or when the RSRP for receiving the downlink signal on the second carrier by the terminal is greater than the third threshold, it indicates that a condition for transmission between the terminal and the access network device is relatively good, and the terminal is an outdoor terminal. The first offset value related to the penetration loss does not need to be considered when the power of the uplink signal is calculated, thereby improving accuracy of the power for sending the uplink signal.

With reference to the first aspect and the foregoing possible implementation, in a possible implementation, the determining, by the terminal based on the path loss on the second carrier, the power for sending the uplink signal on the first carrier may include: determining, by the terminal, a path loss on the first carrier based on the path loss on the second carrier, and determining, based on the path loss on the first carrier, the power for sending the uplink signal on the first carrier.

Optionally, the terminal may use, as the path loss on the first carrier, a result obtained by adding the path loss on the second carrier and a second offset value; or when the second offset value is used to configure an uplink power control parameter for the first carrier, the path loss on the second carrier is directly used as the path loss on the first carrier.

After calculating the path loss on the first carrier, the terminal may determine, according to an existing power control calculation formula based on the path loss on the first carrier and a power control parameter configured by the network device, the power for sending the uplink signal on the first carrier.

In this way, when the terminal is an outdoor terminal, because no penetration loss affects the uplink path loss, the terminal considers only a factor, namely, the path loss, affecting the uplink path loss, and calculates the uplink path loss based on the path loss on the downlink carrier and a difference between the factor on the uplink carrier and the factor on the downlink carrier, thereby improving accuracy of calculating the uplink path loss, and then improving accuracy of the power of the uplink signal.

According to a second aspect, an embodiment of the present invention provides a power determining method, including:

configuring, by a network device, a first offset value for a terminal, where the first offset value is determined based on a penetration loss on a first carrier and a penetration loss on a second carrier, the first carrier is an uplink carrier of the terminal, and the second carrier is a time division duplex TDD carrier or a downlink carrier of the terminal.

In this way, the network device configures the offset value related to the penetration loss for the terminal, so that the terminal calculates, based on the offset value, power for sending an uplink signal by the terminal.

With reference to the second aspect, in a possible implementation, the method may further include:

configuring, by the network device, a first threshold, a second threshold, or a third threshold for the terminal, where the first threshold, the second threshold, and the third threshold are used by the terminal to determine, based on receive power for receiving a downlink signal on the second carrier and the first offset value, power for sending an uplink signal on the first carrier.

In this way, after receiving the first threshold, the terminal can determine, through comparison, whether the receive power for receiving the downlink signal on the second carrier is less than or equal to the first threshold, to determine whether to determine, based on the first offset value, the power for sending the uplink signal.

With reference to the foregoing possible implementation, in a possible implementation, the method may further include:

configuring, by the network device, the first offset value for the terminal by using a system message or radio resource control (radio resource control, RRC) signaling; or
configuring, by the network device, the first threshold, the second threshold, or the third threshold for the terminal by using a system message or RRC signaling.

With reference to the foregoing possible implementations, in a possible implementation, the first offset value and any one of the first threshold, the second threshold, and the third threshold may be carried in a same message or a same piece of signaling.

In this way, the network device can configure the first offset value, and the first threshold, the second threshold, or the third threshold for the terminal by placing the first offset value, and the first threshold, the second threshold, or the third threshold in a same message, thereby greatly reducing signal consumption of the network device.

With reference to the foregoing possible implementations, in a possible implementation, the first offset value and any one of the first threshold, the second threshold, and the third threshold may be carried in different messages or different pieces of signaling.

In this way, the network device can separately configure the first offset value, and the first threshold, the second threshold, or the third threshold for the terminal by placing the first offset value, and the first threshold, the second threshold, or the third threshold in different messages or different pieces of signaling, thereby reducing interference when the first offset value, and the first threshold, the second threshold, or the third threshold are configured, and improving accuracy of parsing the messages or signaling by the terminal.

A third aspect of the embodiments of the present invention provides a terminal, including:

a receiving unit, configured to receive, from a network device, a first offset value that is determined based on a penetration loss on a first carrier and a penetration loss on a second carrier, where the first carrier is an uplink carrier of the terminal, and the second carrier is a time division duplex TDD carrier or a downlink carrier of the terminal; and
a determining unit, configured to determine, based on receive power for receiving a downlink signal on the second carrier and the first offset value, power for sending an uplink signal on the first carrier.

For a specific implementation of the third aspect, refer to behavior and a function of the terminal in the power determining method according to the first aspect or the possible implementations of the first aspect. Details are not repeatedly described herein. Therefore, the terminal according to the third aspect can achieve the same beneficial effect as the first aspect.

A fourth aspect of the embodiments of the present invention provides a terminal. The terminal can implement a function performed by the terminal in the foregoing method embodiment. The function may be implemented by hardware, or may be implemented by executing corresponding software by hardware. The hardware or the software includes one or more modules corresponding to the function.

In a possible design, a structure of the terminal includes a processor and a transceiver. The processor is configured to support the terminal in performing a corresponding function in the foregoing method. The transceiver is configured to support the terminal in communicating with another network element. The terminal may further include a memory and a display. The memory is configured to be coupled to the processor, and the memory stores a program instruction and data that are necessary for the terminal. The display may be used by the terminal to interact with a user.

A fifth aspect of the embodiments of the present invention provides a computer storage medium, configured to store a computer software instruction used by the foregoing terminal. The computer software instruction includes a program designed to perform the foregoing aspects.

A sixth aspect of the embodiments of the present invention provides a computer program product. The computer program product stores a computer software instruction used by the foregoing terminal, and the computer software instruction includes a program designed to perform the foregoing aspects.

A seventh aspect of the embodiments of the present invention provides a network device, including:
a configuration unit, configured to configure, for a terminal, a first offset value that is determined based on a penetration loss on a first carrier and a penetration loss on a second carrier, where the first carrier is an uplink carrier of the terminal, and the second carrier is a time division duplex TDD carrier or a downlink carrier of the terminal.

For a specific implementation of the seventh aspect, refer to behavior and a function of the network device in the power determining method according to the second aspect or the possible implementations of the second aspect. Details are not repeatedly described herein. Therefore, the terminal according to the seventh aspect can achieve the same beneficial effect as the second aspect.

An eighth aspect of the embodiments of the present invention provides a network device. The network device can implement a function performed by the network device in the foregoing method embodiment. The function may be implemented by hardware, or may be implemented by executing corresponding software by hardware. The hardware or the software includes one or more modules corresponding to the function.

In a possible design, a structure of the terminal includes a processor and a transceiver. The processor is configured to support the terminal in performing a corresponding function in the foregoing method. The transceiver is configured to support the terminal in communicating with another network element. The terminal may further include a memory and a display. The memory is configured to be coupled to the processor, and the memory stores a program instruction and data that are necessary for the terminal. The display may be used by the terminal to interact with a user.

A ninth aspect of the embodiments of the present invention provides a computer storage medium, configured to store a computer software instruction used by the foregoing network device. The computer software instruction includes a program designed to perform the foregoing aspects.

A tenth aspect of the embodiments of the present invention provides a computer program product. The computer program product stores a computer software instruction used by the foregoing network device, and the computer software instruction includes a program designed to perform the foregoing aspects.

An eleventh aspect of the embodiments of the present invention provides a path loss determining system. The system includes the terminal according to any one of the foregoing aspects and the network device according to any one of the foregoing aspects.

## BRIEF DESCRIPTION OF DRAWINGS

FIG. 1 is a schematic diagram of a scenario in which an existing 5G system and an LTE system share an uplink carrier;
FIG. 2 is a schematic architectural diagram of a system according to an embodiment of the present invention;
FIG. 3 is a schematic composition diagram of a gNB according to an embodiment of the present invention;
FIG. 4 is a schematic composition diagram of UE according to an embodiment of the present invention;
FIG. 5 is a flowchart of a power determining method according to an embodiment of the present invention;
FIG. 6 is a flowchart of a power determining method according to an embodiment of the present invention;
FIG. 7 is a schematic composition diagram of UE according to an embodiment of the present invention;
FIG. 8 is a schematic composition diagram of UE according to an embodiment of the present invention;
FIG. 9 is a schematic composition diagram of a gNB according to an embodiment of the present invention; and
FIG. 10 is a schematic composition diagram of a gNB according to an embodiment of the present invention.

## DESCRIPTION OF EMBODIMENTS

The following describes implementations of the embodiments of the present invention in detail with reference to accompanying drawings.

A power determining method provided in the embodiments of the present invention may be applied to a communications environment in which a frequency of an uplink carrier is significantly different from a frequency of a downlink carrier. For example, the power determining method provided in the embodiments of the present invention may be applied to a 5G system shown in FIG. 2. As shown in FIG. 2, the 5G system may include at least one terminal and a network device. The terminal is located within a coverage area of the network device, and the network device may cover terminals in a plurality of cells. In the embodiments of the present invention, the terminal may be UE, for example, may be a cellular phone, a cordless phone, a session initiation protocol (session initiation protocol, SIP) phone, a smartphone, a wireless local loop (wireless local loop, WLL) station, a personal digital assistant (personal digital assistant, PDA), a laptop computer, a handheld communications device, a handheld computing device, a satellite radio device, a wireless modem card, and/or another processing device configured to perform communication in a wireless system. The network device may be an access point, a node, a next generation NodeB (gNB), a transmission reception point (transmission receive point, TRP), a transmission point (transmission point, TP), or another network device. It may be understood that, FIG. 2 is merely an example architectural diagram. In addition to the function entities shown in FIG. 2, the 5G system may further include another function entity. This is not limited in the embodiments of the present invention.

In FIG. 2, the UE and the network device may communicate with each other by using an uplink carrier and a downlink carrier, and a frequency of the uplink carrier is significantly different from a frequency of the downlink carrier. In FIG. 2, the uplink carrier may be an uplink carrier shared by the UE with UE in an LTE system, or may be a carrier decoupled from the downlink carrier, that is, a duplex distance (duplex distance) between the uplink carrier and the downlink carrier may be flexibly configured, for example, the uplink carrier may be a low-frequency carrier (for example, a carrier with a center frequency of 1.8 GHz), and the downlink carrier may be a high-frequency carrier (for example, a carrier with a center frequency of 3.5 G). The downlink carrier may be a carrier used to transmit only an NR downlink signal in the 5G system, or may be a time division duplex carrier used to transmit an NR uplink signal and downlink signal in the 5G system. It may be understood that, in the embodiments of the present invention, the low-frequency carrier and the high-frequency carrier are relative concepts, the low-frequency carrier is a carrier with a lower frequency band in two carriers, and the high-frequency carrier is a carrier with a higher frequency band in the two carriers.

The solutions provided in the embodiments of the present invention are described below by using only an example in which the terminal is UE and the network device is a gNB.

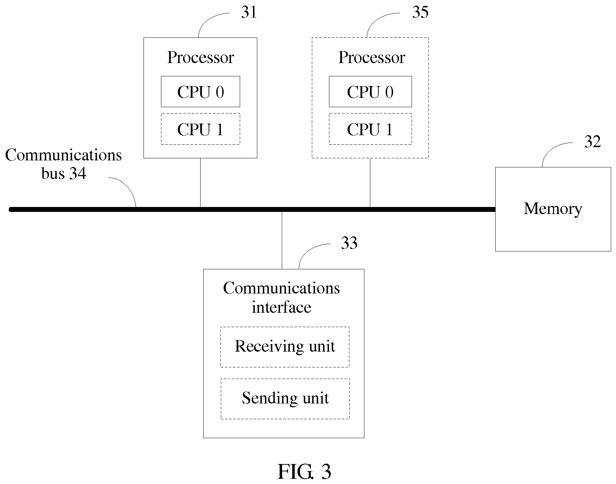

FIG. 3 is a schematic composition diagram of a gNB according to an embodiment of the present invention. As shown in FIG. 3, the gNB may include at least one processor 31, a memory 32, a communications interface 33, and a communications bus 34. The components of the gNB are described in detail below with reference to FIG. 3.

The processor 31 is a control center of the gNB, and may be one processor or a collective name of a plurality of processing elements. For example, the processor 31 may be a central processing unit (central processing unit, CPU) or an application-specific integrated circuit (application specific integrated circuit, ASIC), or may be one or more integrated circuits configured to implement this embodiment of the present invention, for example, one or more microprocessors (digital signal processor, DSP) or one or more field programmable gate arrays (field programmable gate array, FPGA). The processor 31 may perform various functions of the gNB by running or executing a software program stored in the memory 32 and invoking data stored in the memory 32.

During specific implementation, in an embodiment, the processor 31 may include one or more CPUs, for example, a CPU 0 and a CPU 1 that are shown in FIG. 3. During specific implementation, in an embodiment, the gNB may include a plurality of processors, for example, the processor 31 and a processor 35 that are shown in FIG. 3. Each of these processors may be a single-core (single-CPU) processor or a multi-core (multi-CPU) processor. The processor herein may be one or more devices, circuits, and/or processing cores for processing data (such as a computer program instruction).

The memory 32 may be a read-only memory (read-only memory, ROM) or a static storage device of another type that can store static information and instruction, or a random access memory (random access memory, RAM) or a dynamic storage device of another type that can store information and an instruction, or may be an electrically erasable programmable read-only memory (electrically erasable programmable read-only memory, EEPROM), a compact disc read-only memory (compact disc read-only memory, CD-ROM), another compact disc storage, optical disc storage (including a compact disc, a laser disc, an optical disc, a digital versatile disc, a Blu-ray disc, and the like), or magnetic disk storage medium, another magnetic storage device, or any other medium that can carry or store expected program code in a form of an instruction or a data structure and can be accessed by a computer, but is not limited thereto. The memory 32 may exist independently, and is connected to the processor 31 by using the communications bus 34. Alternatively, the memory 32 may be integrated into the processor 31. The memory 32 is configured to store a software program for executing the solutions provided in the embodiments of the present invention, where the execution is controlled by the processor 31.

The communications interface 33 is configured to communicate with another device or a communications network such as an Ethernet, a radio access network (radio access network, RAN), or a wireless local area network (wireless local area networks, WLAN). The communications interface 33 may include a receiving unit that implements a receiving function and a sending unit that implements a sending function.

The communications bus 34 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified as an address bus, a data bus, a control bus, or the like. For ease of representation, only one thick line is used to represent the bus in FIG. 3, but this does not mean that there is only one bus or only one type of bus.

The network device in FIG. 3 may perform an operation performed by a network device in the path determining method provided in the embodiments of this application. For example, the network device may configure a first offset value for a terminal.

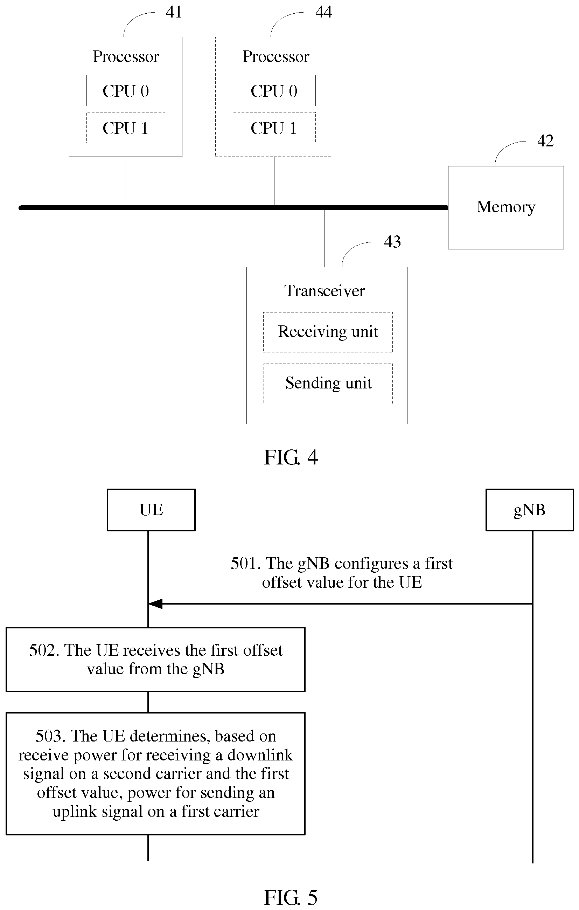

FIG. 4 is a schematic composition diagram of UE according to an embodiment of the present invention. As shown in FIG. 4, the UE may include at least one processor 41, a memory 42, and a transceiver 43. The components of the UE are described in detail below with reference to FIG. 4.

The processor 41 is a control center of the UE, and may be one processor or a collective name of a plurality of processing elements. For example, the processor 41 may be a CPU or an ASIC, or may be one or more integrated circuits configured to implement this embodiment of the present invention, for example, one or more DSPs or one or more FPGAs. The processor 41 may perform various functions of the UE by running or executing a software program stored in the memory 42 and invoking data stored in the memory 42.

During specific implementation, in an embodiment, the processor 41 may include one or more CPUs, for example, a CPU 0 and a CPU 1 that are shown in FIG. 4. During specific implementation, in an embodiment, the UE may include a plurality of processors, for example, the processor 41 and a processor 44 shown in FIG. 4. Each of these processors may be a single-CPU processor or a multi-CPU processor. The processor herein may be one or more devices, circuits, and/or processing cores for processing data (such as a computer program instruction).

The memory 42 may be a ROM or another type of static storage device that can store static information and a static instruction, or a RAM or another type of dynamic storage device that can store information and an instruction, or may be an EEPROM, a CD-ROM or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory 42 is not limited thereto. The memory 42 may exist independently, and is connected to the processor 41 by using a communications bus 44. Alternatively, the memory 42 may be integrated into the processor 41. The memory 42 is configured to store a software program for executing the solutions in the present invention, where the execution is controlled by the processor 41.

The transceiver 43 is configured to communicate with another device or a communications network such as the Ethernet, a RAN, or a WLAN. The transceiver 43 may include a receiving unit that implements a receiving function and a sending unit that implements a sending function.

The device structure shown in FIG. 4 does not constitute a limitation on the UE. The UE may include more or fewer components than those shown in the figure, or some components may be combined, or the components may be arranged differently. Although not shown, the UE may further include a battery, a camera, a Bluetooth module, a global positioning system (global positioning system, GPS) module, and the like. Details are not described herein.

The UE shown in FIG. 4 may perform an operation performed by UE in the path determining method provided in the embodiments of this application. For example, the UE may receive a first offset value from a network device, and determine power of an uplink signal on an uplink carrier based on the first offset value when the UE is indoor UE.

The power determining method provided in the embodiments of the present invention is described in detail below with reference to the 5G system shown in FIG. 2. In addition, it should be noted that, although a logical order is shown in the following method flowchart, in some cases, shown or described steps may be performed in an order different from the order herein.

FIG. 5 is a flowchart of a power determining method according to an embodiment of the present invention. The method is performed by the UE shown in FIG. 4 and the gNB shown in FIG. 3 through interaction. As shown in FIG. 5, the method may include the following steps.

Step 501: The gNB configures a first offset value for the UE.

The first offset value is determined based on a penetration loss on a first carrier and a penetration loss on a second carrier. Preferably, the first offset value may be a difference between the penetration loss on the first carrier and the penetration loss on the second carrier. The first carrier is an uplink carrier of the UE, and the second carrier is a TDD carrier or a downlink carrier of the UE.

In this embodiment of the present invention, the penetration loss (penetration loss) is a ratio (in a unit of DB) of signal strength outside a building to signal strength inside the building in a case in which a signal source is located outside the building during signal transmission. The penetration loss is related to a structure of the building, a material of the building, a location of the signal source, and the like. The penetration loss is also a function of a carrier frequency, a lower frequency indicates a lower loss, and a higher frequency indicates a higher loss. The penetration loss on the first carrier is a penetration loss generated when the UE and the gNB transmit a signal on the first carrier. The penetration loss on the second carrier is a penetration loss generated when the UE and the gNB transmit a signal on the second carrier.

Optionally, a penetration loss $PL_{tw}$ of any carrier may be calculated according to the following formula:

$$PL_{tw} = PL_{npi} - 10\log_{10}\sum_{i=1}^{N}\left( p_i \times 10^{\frac{L_{material\_i}}{-10}} \right),$$

where $PL_{tw}$ is a weighted value of penetration losses of a plurality of materials, each material is indicated by $i$, $PL_{npi}$ is

$$\sum_{i=1}^{N} p_i = 1$$

a constant, $p_i$ is a ratio between different $N$ materials, $\sum_{i=1}^{N} p_i = 1$, $L_{material\_i} = a_{material\_i} + b_{material\_i} \cdot f$ and is a penetration loss of a material $i$, $a_{material\_i}$ is a constant value of the penetration loss of the material $i$, $b_{material\_i}$ is a frequency-related parameter of the penetration loss of the material $i$, and f is a carrier frequency. As shown in Table 1, different materials have different penetration losses:

**Table 1**

| Material (Material) | Penetration loss [dB] |
|---|---|
| Standard glass (Standard multi-pane glass) | $L_{glass}$ = 2 + 0.2$f$ |
| Reinforced glass (IRR glass) | $L_{IIRglass}$ = 23 + 0.3$f$ |
| Concrete (Concrete) | $L_{concrete}$ = 5 + 4$f$ |
| Wood (Wood) | $L_{wood}$ = 4.85 + 0.12$f$ |

For example, in existing modeling, a formula for calculating a penetration loss of a typical low-loss (Low-loss) penetration loss model is as follows:

$$PL_{tw} = 5 - 10\log_{10}\left( 0.3 \cdot 10^{\frac{-L_{glass}}{10}} + 0.7 \cdot 10^{\frac{-L_{concrete}}{10}} \right);$$

and a formula for calculating a penetration loss of a high-loss (High-loss) penetration loss model is as follows:

$$PL_{tw} = 5 - 10\log_{10}\left( 0.7 \cdot 10^{\frac{-L_{IIRglass}}{10}} + 0.3 \cdot 10^{\frac{-L_{concrete}}{10}} \right).$$

Step 502: The UE receives the first offset value from the gNB.

Step 503: The UE determines, based on receive power for receiving a downlink signal on the second carrier and the first offset value, power for sending an uplink signal on the first carrier.

In this way, when the uplink signal is sent, in consideration of impact of the penetration loss on an uplink path loss, the power for sending the uplink signal is determined based on a transmission environment of the UE and the offset value related to the penetration loss, thereby improving accuracy of the power for sending the uplink signal.

Optionally, in the technical solution shown in FIG. 5, the UE may obtain a first threshold, a second threshold, or a third threshold from the gNB. Only when the receive power for receiving the downlink signal on the second carrier by the UE is less than or equal to the first threshold, when a path loss for receiving the downlink signal on the second carrier by the UE is less than or equal to the second threshold, or when RSRP for receiving the downlink signal on the second carrier by the UE is less than or equal to the third threshold, the UE determines, based on the first threshold, that the UE determines, based on the receive power for receiving the downlink signal on the second carrier and the first offset value, the power for sending the uplink signal on the first carrier; otherwise, the UE determines, based on the receive power for receiving the downlink signal on the second carrier, the power for sending the uplink signal on the first carrier.

The first threshold, the second threshold, and the third threshold are described in the summary, and details are not repeatedly described herein.

The technical method shown in FIG. 5 is further described and introduced below by using only an example in which the UE obtains the first threshold from the gNB, and determines, based on the first threshold, whether to determine, based on the first offset value, the power for sending the uplink signal:

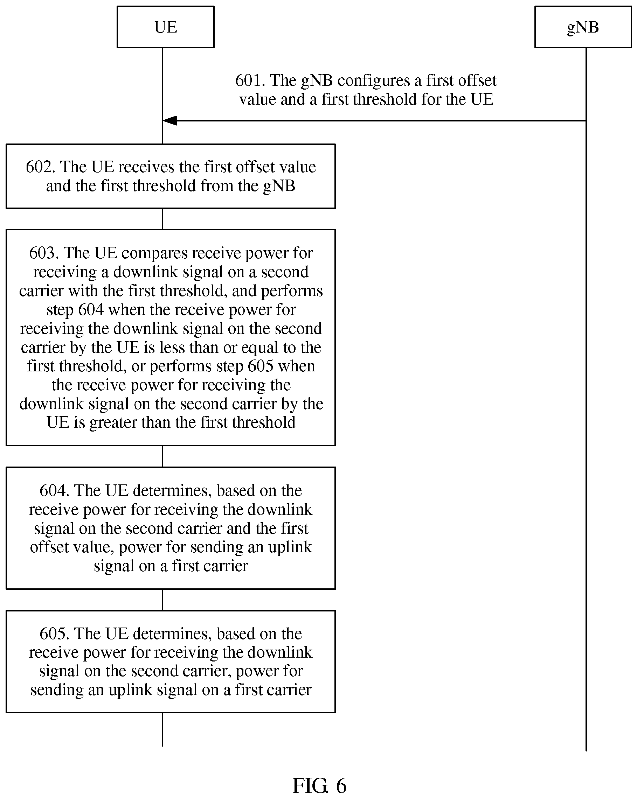

FIG. 6 is a flowchart of another power determining method according to an embodiment of the present invention. The method is performed by UE and a gNB through interaction. As shown in FIG. 6, the method may include the following steps.

Step 601: The gNB configures a first offset value and a first threshold for the UE.

Optionally, the gNB may configure the first offset value for the UE by using a system message or RRC signaling, and configure the first threshold for the UE by using a system message or RRC signaling. The first offset value and the first threshold may be carried in a same message or a same piece of signaling, or carried in different messages or different pieces of signaling.

Step 602: The UE receives the first offset value and the first threshold from the gNB.

Step 603: The UE compares receive power for receiving a downlink signal on a second carrier with the first threshold, and performs step 604 when the receive power for receiving the downlink signal on the second carrier by the UE is less than or equal to the first threshold, or performs step 605 when the receive power for receiving the downlink signal on the second carrier by the UE is greater than the first threshold.

Step 604: The UE determines, based on the receive power for receiving the downlink signal on the second carrier and the first offset value, power for sending an uplink signal on a first carrier.

Optionally, that the UE determines, based on the receive power for receiving the downlink signal on the second carrier and the first offset value, power for sending an uplink signal on a first carrier may specifically include: determining, based on a path loss on the second carrier and the first offset value, the power for sending the uplink signal on the first carrier, where the path loss on the second carrier is determined by the UE based on the receive power for receiving the downlink signal on the second carrier.

In this embodiment of the present invention, the path loss is a ratio of power for receiving a signal on a receive end to power for transmitting a signal on a transmit end, and includes a path loss, shadow fading, a penetration loss, an antenna gain, and the like. The path loss may be obtained through measurement based on a received signal, or may be obtained through calculation based on a related parameter.

The UE may specifically determine, in the following Manner 1 or Manner 2 based on the path loss on the second carrier and the first offset value, the power for sending the uplink signal on the first carrier:

Manner 1: The UE determines a path loss on the first carrier based on the path loss on the second carrier and the first offset value, and determines, based on the path loss on the first carrier, the power for sending the uplink signal on the first carrier.

Optionally, that the UE determines a path loss on the first carrier based on the path loss on the second carrier and the first offset value may include:

using, as the path loss on the first carrier, a result obtained by adding the path loss on the second carrier, the first offset value, and a second offset value, for example, calculating the path loss PL1 on the first carrier according to a formula $PL1 = PL2 + offset1 + offset2$ ; or

when the second offset value is used to configure an uplink power control parameter for the first carrier, using, as the path loss on the first carrier, a result obtained by adding the path loss on the second carrier and the first offset value, for example, calculating the path loss PL1 on the first carrier according to a formula $PL1 = PL2 + offset2$

PL2 is the path loss on the second carrier, $offset1$ is the second offset value, $offset2$ is the first offset value, and the second offset value is a difference between the path loss on the first carrier and the path loss on the second carrier.

In this embodiment of the present invention, the path loss (path loss) is also referred to as a propagation loss, is a loss generated during space propagation of an electric wave, is caused by radiation and spreading of transmit power and a propagation characteristic of a channel, and reflects a change of an average value of signal received power with a distance between a transmitter and receiver in a macro range. The penetration loss is related to a signal transmission medium, a signal transmission environment, and a distance between a receive end and a transmit end. The path loss is also a function of a carrier frequency, a lower frequency indicates a lower loss, and a higher frequency indicates a higher loss. The path loss on the first carrier is a path loss generated when the UE and the gNB transmit a signal on the first carrier. The path loss on the second carrier is a path loss generated when the UE and the gNB transmit a signal on the second carrier.

Optionally, a path loss $PL$ of any carrier may be calculated according to the following formula:

$PL = 32.4 + 21\log_{10}(d) + 20\log_{10}(f)$, where $d$ is a distance between a receive end and a transmit end, and $f$ is a carrier frequency.

After the path loss on the first carrier is calculated, the UE may calculate, with reference to an existing power control formula and the determined uplink path loss, the power for sending the uplink signal. The existing power control formula is described in the description of embodiments.

Optionally, the UE may determine, according to a power control calculation formula based on the path loss on the first carrier and a power control parameter configured by the network device, the power for sending the uplink signal on the first carrier, where a value unit of the power is dBm.

It should be noted that, for the power control calculation formula in this embodiment of the present invention, refer to the existing power control calculation formula, for example, a power control formula for a physical uplink shared channel (physical uplink shared channel, PUSCH) may be as follows:

$$P_{\text{PUSCH,c}}(i) = \min \left\{ \begin{array}{l} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{array} \right\};$$

a power control formula for a sounding reference signal (sounding reference signal, SRS) may be as follows:

$$P_{\text{SRS,c}}(i) = \min \left\{ P_{\text{CMAX,c}}(i), 10\log_{10}(M_{\text{SRS,c}}) + P_{\text{O\_SRS,c}}(m) + \alpha_{\text{SRS,c}} \cdot PL_c + f_{\text{SRS,c}}(i) \right\};$$

or

$$P_{\text{SRS,c}}(i) = \min \left\{ P_{\text{CMAX,c}}(i), P_{\text{SRS\_OFFSET,c}}(m) + 10\log_{10}(M_{\text{SRS,c}}) + P_{\text{O\_PUSCH,c}}(j) + \alpha_c(j) \cdot PL_c + f_c(i) \right\};$$

and
a power control formula for a physical uplink control channel (physical uplink control channel, PUCCH) may be as follows:

$$P_{\text{PUCCH}}(i) = \min \left\{ \begin{array}{l} P_{\text{CMAX,c}}(i), \\ P_{\text{0\_PUCCH}} + PL_c + h(n_{CQI}, n_{HARQ}, n_{SR}) + \Delta_{\text{F\_PUCCH}}(F) + \Delta_{TxD}(F') + g(i) \end{array} \right\},$$

where
in the foregoing formulas, i is a subframe number, c is a carrier number, $P_{\text{CMAX},c}(i)$ is maximum transmit power of the gNB, $M_{\text{PUSCH},c}(i)$ is a quantity of PUSCHs on a $c^{\text{th}}$ carrier of an $i^{\text{th}}$ subframe, $P_{\text{O\_PUSCH},c}(j)$ is target receive power, $\alpha_c(j)$ is a path loss compensation factor, $PL_c$ is a path loss, $\Delta_{\text{TF},c}(i)$ is an adjustment value related to a modulation scheme, and $f_c(i)$ is a power control factor.

Manner 2: The UE may determine, according to the following Formula 1 or Formula 2, the power $P$ for sending the uplink signal on the first carrier:

Formula 1: $$P = \min\{P_{\max}, FUNCTION(M, P_0, \Delta, f) + \alpha \cdot PL + offset\};$$

and

Formula 2: $$P = \min\{P_{\max}, FUNCTION(M, P_0, \Delta, f) + \alpha \cdot PL + \alpha \cdot offset\},$$

where

in Formula 1 and Formula 2, *offset* is the first offset value;
*PL* is determined based on the path loss on the second carrier, *PL* is the path loss on the second carrier or *PL* is a result obtained by adding the path loss on the second carrier and a second offset value, the path loss on the second carrier is determined by the UE based on the receive power for receiving the downlink signal on the second carrier, and the second offset value is determined based on a path loss on the first carrier and the path loss on the second carrier;
$P_{\max}$ is maximum transmit power of the UE on the first carrier;
$FUNCTION(M, P_0, \Delta, f)$ is a function related to $M, P_0, \Delta, f$ in uplink power control, M is a quantity of resource blocks occupied by the UE to send the uplink signal on the first carrier, $P_0$ is a power control parameter that is related to target receive power and that is obtained by the UE from the network device, $\Delta$ is a power control parameter that is related to a coding and modulation scheme and that is obtained by the UE from the network device, and $f$ is a power control parameter that is related to a power command and that is obtained by the UE from the network device; and

$\alpha$ is a power control parameter that is related to path loss compensation and that is obtained by the UE from the network device.

In this way, the UE can directly calculate, based on the first offset value, the power for sending the uplink signal, without first calculating the uplink path loss, and then calculating, based on the uplink path loss, the power for sending the uplink signal, thereby reducing calculation complexity of the UE.

Optionally, in this embodiment of the present invention, for different uplink signals, the function *FUNC-TION(M,P$_0$,$\Delta$,f)* has different representation forms. For example, for a physical uplink shared channel (physical uplink shared channel, PUSCH), *FUNCTION(M,P$_0$,$\Delta$,f)* is:

$$10\log_{10}(M_{\mathrm{PUSCH,c}}(i)) + P_{\mathrm{O\_PUSCH,c}}(j) + \Delta_{\mathrm{TF,c}}(i) + f_c(i)\;;$$

for a sounding reference signal (sounding reference signal, SRS), *FUNCTION(M,P$_0$,$\Delta$,f)* is:

$$10\log_{10}(M_{\mathrm{SRS,c}}) + P_{\mathrm{O\_SRS,c}}(m) + f_{SRS,c}(i)\;;$$

or

$$10\log_{10}(M_{\mathrm{SRS,c}}) + P_{\mathrm{O\_PUSCH,c}}(j) + f_c(i)\;;$$

and for a physical uplink control channel (physical uplink control channel, PUCCH), *FUNCTION(M,P$_0$,$\Delta$,f)* is:

$$P_{\mathrm{0\_PUCCH}} + h(n_{CQI}, n_{HARQ}, n_{SR}) + \Delta_{\mathrm{F\_PUCCH}}(F) + \Delta_{TxD}(F') + g(i)\;,$$

where in the foregoing formulas, i is a subframe number, c is a carrier number, $P_{\mathrm{CMAX,c}}(i)$ is maximum transmit power of the gNB, $M_{\mathrm{PUSCH,c}}(i)$ is a quantity of PUSCHs on a c$^{th}$ carrier of an i$^{th}$ subframe, $P_{\mathrm{O\_PUSCH,c}}(j)$ is target receive power, $\Delta_{\mathrm{TF,c}}(i)$ is an adjustment value related to a modulation scheme, and $f_c(i)$ is a power control factor.

Step 605: The UE determines, based on the receive power for receiving the downlink signal on the second carrier, power for sending an uplink signal on a first carrier.

Optionally, that the UE determines, based on the receive power for receiving the downlink signal on the second carrier, power for sending an uplink signal on a first carrier may include:
determining, based on a path loss on the second carrier, the power for sending the uplink signal on the first carrier, where the path loss on the second carrier is determined by the UE based on the receive power for receiving the downlink signal on the second carrier.

Optionally, the determining, by the UE based on the path loss on the second carrier, the power for sending the uplink signal on the first carrier may include: determining, by the UE, a path loss on the first carrier based on the path loss on the second carrier, and determining, based on the path loss on the first carrier, the power for sending the uplink signal on the first carrier.

The determining, by the UE, a path loss on the first carrier based on the path loss on the second carrier may include:

using, by the UE as the path loss on the first carrier, a result obtained by adding the path loss on the second carrier and a second offset value, where the second offset value is a difference between the path loss on the first carrier and the path loss on the second carrier, for example, calculating the path loss PL1 on the first carrier according to a formula *PL*1 = *PL*2 + *offset*1; or

when the second offset value is used to configure an uplink power control parameter for the first carrier, using the path loss on the second carrier as the path loss on the first carrier, for example, calculating the path loss PL1 on the first carrier according to a formula *PL*1 = *PL*2.

It may be understood that, for a manner in which the UE obtains a second threshold or a second threshold from the gNB, and determines, based on the second threshold or the third threshold, whether to determine, based on the first offset value, the power for sending the uplink signal, refer to the solution shown in FIG. 5. Details are not repeatedly described herein. For example, the terminal may compare a path loss for receiving the downlink signal on the second carrier with the second threshold, and perform step 604 when the path loss for receiving the downlink signal on the second carrier by the terminal is less than or equal to the second threshold, or perform step 605 when the path loss for receiving the downlink signal on the second carrier by the terminal is greater than the second threshold; or compare RSRP for receiving the downlink signal on the second carrier with the third threshold, and perform step 604 when the RSRP for receiving the downlink signal on the second carrier by the terminal is less than or equal to the third threshold, or perform step 605 when the RSRP for receiving the downlink signal on the second carrier by the terminal is greater than the third threshold.

In this way, when sending the uplink signal, in consideration of impact of the penetration loss on the uplink path loss, the UE determines, based on a transmission environment of the UE and the offset value related to the penetration loss, the power for sending the uplink signal, thereby improving accuracy of the power for sending the uplink signal.

The solutions provided in the embodiments of the present invention are mainly described above from a perspective of interaction between the UE and the gNB. It may be understood that, to implement the foregoing functions, network elements such as the UE and the gNB include corresponding hardware structures and/or software modules for performing the functions. A person skilled in the art should be easily aware that, the example algorithm steps described with reference to the embodiments disclosed in this specification can be implemented in a form of hardware or a combination of hardware and computer software in the present invention. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present invention.

In the embodiments of the present invention, the UE may be divided into function modules based on the foregoing method examples. For example, function modules may be obtained through division based on corresponding functions, or two or more functions may be integrated into one processing module. The integrated module may be implemented in a form of hardware, or may be implemented in a form of a software function module. It should be noted that, in the embodiments of the present invention, the module division is an example and is merely logical function division, and there may be another division manner during actual implementation.

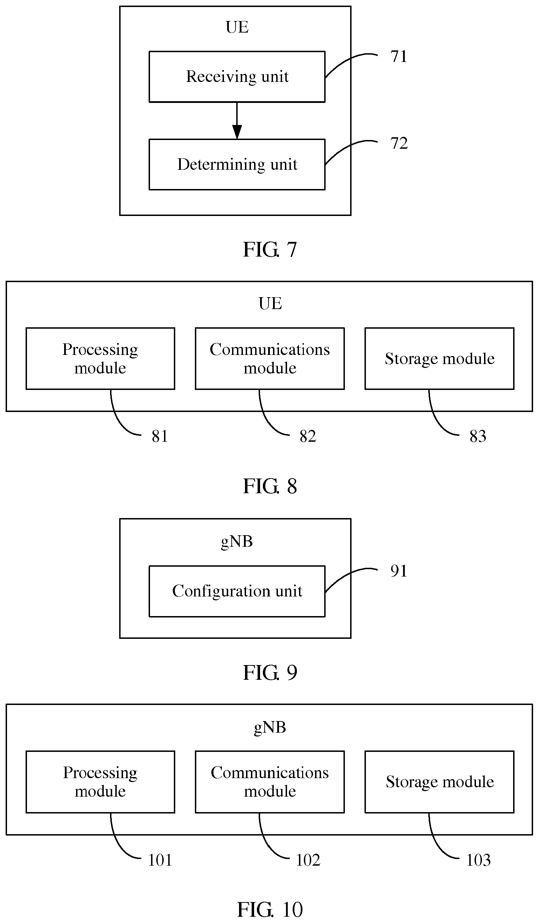

When function modules are obtained through division based on corresponding functions, FIG. 7 is a possible schematic composition diagram of the UE in the foregoing embodiments. As shown in FIG. 7, the UE may include a receiving unit 71 and a determining unit 72.

The receiving unit 71 is configured to support the UE in performing step 502 in the power determining method shown in FIG. 5 and step 602 in the power determining method shown in FIG. 6.

The determining unit 72 is configured to support the UE in performing step 503 in the power determining method shown in FIG. 5 and step 603 to step 605 in the power determining method shown in FIG. 6.

It should be noted that, all related content of the steps in the foregoing method embodiments can be cited in function descriptions of corresponding function modules, and details are not described herein. The UE provided in this embodiment of the present invention is configured to perform the foregoing power determining method, and therefore can achieve the same effect as the foregoing power determining method.

When an integrated unit is used, FIG. 8 is another possible schematic composition diagram of the UE in the foregoing embodiments. As shown in FIG. 8, the UE may include a processing module 81 and a communications module 82.

The processing module 81 is configured to control and manage an action of the UE. For example, the processing module 81 is configured to support the UE in performing step 503 in FIG. 5 and step 603 to step 606 in FIG. 6; and/or is configured to perform another process of the technology described in this specification. The communications module 82 is configured to support the UE in communicating with another network entity, for example, communicating with a function module or a network entity shown in FIG. 2. The UE may further include a storage module 83, configured to store program code and data of a server.

The processing module 81 may be a processor or a controller. The processing module 81 may implement or execute various example logical blocks, modules, and circuits described with reference to the content disclosed in the present invention. Alternatively, the processor may be a combination implementing a computing function, for example, a combination including one or more microprocessors, or a combination of a DSP and a microprocessor. The communications module 82 may be a transceiver, a transceiver circuit, a communications interface, or the like. The storage module 83 may be a memory.

When the processing module 81 is a processor, the communications module 82 is a communications interface, and the storage module 83 is a memory, the server in this embodiment of the present invention may be the UE shown in FIG. 4.

When function modules are obtained through division based on corresponding functions, FIG. 9 is a possible schematic composition diagram of the gNB in the foregoing embodiments. As shown in FIG. 9, the gNB may include a configuration unit 91.

The configuration unit 91 is configured to support the gNB in performing step 501 in the power determining method shown in FIG. 5 and step 601 in the power determining method shown in FIG. 6.

It should be noted that, all related content of the steps in the foregoing method embodiments can be cited in function descriptions of corresponding function modules, and details are not described herein. The gNB provided in this embodiment of the present invention is configured to perform the foregoing power determining method, and therefore can achieve the same effect as the foregoing power determining method.

When an integrated unit is used, FIG. 10 is another possible schematic composition diagram of the gNB in the foregoing embodiments. As shown in FIG. 10, the gNB may include a processing module 101 and a communications module 102.

The processing module 101 is configured to control and manage an action of the gNB. For example, the processing module 101 is configured to support the UE in performing step 501 in FIG. 5 and step 601 in FIG. 6; and/or is configured to perform another process of the technology described in this specification. The communications module 102 is configured to support the gNB in communicating with another network entity, for example, communicating with a function module or a network entity shown in FIG. 2. The gNB may further include a storage module 103, configured to store program code and data of a server.

The processing module 101 may be a processor or a controller. The processing module 101 may implement or execute various example logical blocks, modules, and circuits described with reference to the content disclosed in the present invention. Alternatively, the processor may be a combination implementing a computing function, for example, a combination including one or more microprocessors, or a combination of a DSP and a microprocessor. The communications module 102 may be a transceiver, a transceiver circuit, a communications interface, or the like. The storage module 103 may be a memory.

When the processing module 101 is a processor, the communications module 102 is a communications interface, and the storage module 103 is a memory, the server in this embodiment of the present invention may be the gNB shown in FIG. 3.

The foregoing descriptions of the implementations allow a person skilled in the art to understand that, for the purpose of convenient and brief description, division of the foregoing function modules is used as an example for description. During actual application, the foregoing functions can be allocated to different function modules for implementation as required, that is, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, the module or unit division is merely logical function division, and there may be another division manner during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed on different places. Some or all of the units may be selected based on an actual requirement to achieve the objectives of the solutions of the embodiments.

In addition, function units in the embodiments of the present invention may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of the embodiments of the present invention essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in the embodiments of the present invention. The storage medium includes: any medium that can store program code, such as a USB flash drive, a removable hard disk, a ROM, a RAM, a magnetic disk, or an optical disc.

**Claims**

1. A power determining method, comprising:

    Receiving (502, 602), by a terminal (UE), a first offset value from a network device (gNB), wherein the first offset value is determined based on a penetration loss on a first carrier and a penetration loss on a second carrier, a frequency of the first carrier being significantly different from a frequency of the second carrier, the first carrier is an uplink carrier of the terminal, and the second carrier is a time division duplex, TDD, carrier or a downlink carrier of the terminal comprising a reference signal;
    determining (503, 605), by the terminal based on receive power for receiving a downlink signal on the second carrier and the first offset value, power for sending an uplink signal on the first carrier,
    when the receive power for receiving the downlink signal on the second carrier by the terminal is less than or equal to a first threshold; or
    when a path loss for receiving the downlink signal on the second carrier by the terminal is less than or equal to a second threshold,; or
    when reference signal received power, RSRP, for receiving the downlink signal on the second carrier by the terminal is less than or equal to a third threshold.

2. The power determining method according to claim 1, wherein the determining, by the terminal based on receive power for receiving a downlink signal on the second carrier and the first offset value, power for sending an uplink signal on the first carrier comprises:
    determining, by the terminal based on the path loss on the second carrier and the first offset value, the power for sending the uplink signal on the first carrier, wherein the path loss on the second carrier is determined by the terminal based on the receive power for receiving the downlink signal on the second carrier.

3. The power determining method according to claim 2, wherein the determining, by the terminal based on the path loss on the second carrier and the first offset value, the power for sending the uplink signal on the first carrier comprises:
    determining, by the terminal, a path loss on the first carrier based on the path loss on the second carrier and the first offset value, and determining, based on the path loss on the first carrier, the power for sending the uplink signal on the first carrier.

4. The power determining method according to claim 3, wherein the determining, by the terminal, a path loss on the first carrier based on the path loss on the second carrier and the first offset value comprises:

    using, by the terminal as the path loss on the first carrier, a result obtained by adding the path loss on the second carrier, the first offset value, and a second offset value, wherein
    the second offset value is determined based on the path loss on the first carrier and the path loss on the second carrier.

5. The power determining method according to claim 3, wherein the determining, by the terminal, a path loss on the first carrier based on the path loss on the second carrier and the first offset value comprises:
    using, by the terminal as the path loss on the first carrier, a result obtained by adding the path loss on the second carrier and the first offset value.

6. The power determining method according to claim 2, wherein the determining, by the terminal based on the path loss on the second carrier and the first offset value, the power for sending the uplink signal on the first carrier comprises:
    the power $P$ for sending the uplink signal on the first carrier by the terminal satisfies the following formula:

$$ P = \min\{P_{\max}, FUNCTION(M, P_0, \Delta, f) + \alpha \cdot PL + \mathit{offset}\} \, , $$

    wherein

    *offset* is the first offset value;
    *PL* is determined based on the path loss on the second carrier, *PL* is the path loss on the second carrier or *PL* is a result obtained by adding the path loss on the second carrier and a second offset value, the path loss on the second carrier is determined by the terminal based on the receive power for receiving the downlink signal on the second carrier, and the second offset value is determined based on a path loss on the first carrier and the path loss on the second carrier;

$P_{max}$ is maximum transmit power of the terminal on the first carrier;

$FUNCTION(M,P_0,\Delta,f)$ is a function related to $M,P_0,\Delta,f$ in uplink power control, M is a quantity of resource blocks occupied by the terminal to send the uplink signal on the first carrier, $P_0$ is a power control parameter that is related to target receive power and that is obtained by the terminal from the network device, $\Delta$ is a power control parameter that is related to a coding and modulation scheme and that is obtained by the terminal from the network device, and $f$ is a power control parameter that is related to a power command and that is obtained by the terminal from the network device; and

$\alpha$ is a power control parameter that is related to path loss compensation and that is obtained by the terminal from the network device.

7. The power determining method according to claim 2, wherein the determining, by the terminal based on the path loss on the second carrier and the first offset value, the power for sending the uplink signal on the first carrier comprises:

the power P for sending the uplink signal on the first carrier by the terminal satisfies the following formula:

$$P = \min\{P_{max}, FUNCTION(M, P_0, \Delta, f) + \alpha \cdot PL + \alpha \cdot offset\},$$

wherein

*offset* is the first offset value;

*PL* is determined based on the path loss on the second carrier, *PL* is the path loss on the second carrier or *PL* is a result obtained by adding the path loss on the second carrier and a second offset value, the path loss on the second carrier is determined by the terminal based on the receive power for receiving the downlink signal on the second carrier, and the second offset value is determined based on a path loss on the first carrier and the path loss on the second carrier;

$P_{max}$ is maximum transmit power of the terminal on the first carrier;

$FUNCTION(M,P_0,\Delta,f)$ is a function related to $M,P_0,\Delta,f$ in uplink power control, M is a quantity of resource blocks occupied by the terminal to send the uplink signal on the first carrier, $P_0$ is a power control parameter that is related to target receive power and that is obtained by the terminal from the network device, $\Delta$ is a power control parameter that is related to a coding and modulation scheme and that is obtained by the terminal from the network device, and $f$ is a power control parameter that is related to a power command and that is obtained by the terminal from the network device; and

$\alpha$ is a power control parameter that is related to path loss compensation and that is obtained by the terminal from the network device.

8. The power determining method according to any one of claims 1 to 7, further comprising:

obtaining, by the terminal, the first threshold, the second threshold, or the third threshold from the network device.

9. A terminal (UE), comprising:

a receiving unit (71), configured to receive a first offset value from a network device (gNB), wherein the first offset value is determined based on a penetration loss on a first carrier and a penetration loss on a second carrier, a frequency of the first carrier being significantly different from a frequency of the second carrier, the first carrier is an uplink carrier of the terminal, and the second carrier is a time division duplex, TDD, carrier or a downlink carrier of the terminal comprising a reference signal;

a determining unit (72), configured to determine, based on receive power for receiving a downlink signal on the second carrier and the first offset value, power for sending an uplink signal on the first carrier

when the receive power for receiving the downlink signal on the second carrier by the terminal is less than or equal to a first threshold; or

when a path loss for receiving the downlink signal on the second carrier by the terminal is less than or equal to a second threshold; or

when reference signal received power, RSRP, for receiving the downlink signal on the second carrier by the terminal is less than or equal to a third threshold.

**10.** The terminal according to claim 9, wherein
the determining unit is specifically configured to determine, based on the path loss on the second carrier and the first offset value, the power for sending the uplink signal on the first carrier, wherein the path loss on the second carrier is determined by the terminal based on the receive power for receiving the downlink signal on the second carrier.

**11.** A power determining system, comprising the terminal (UE) according to any one of claims 9 to 10 and the network device (gNB) comprising a configuration unit (91), configured to configure a first offset value for a terminal, wherein the first offset value is determined based on a penetration loss on a first carrier and a penetration loss on a second carrier, the first carrier is an uplink carrier of the terminal, and the second carrier is a time division duplex, TDD, carrier or a downlink carrier of the terminal.

**Patentansprüche**

**1.** Leistungsbestimmungsverfahren, das Folgendes umfasst:

Empfangen (502, 602) eines ersten Versatzwerts von einer Netzwerkvorrichtung (gNB) durch ein Endgerät (UE), wobei der erste Versatzwert basierend auf einem Penetrationsverlust auf einem ersten Träger und einem Penetrationsverlust auf einem zweiten Träger bestimmt wird, eine Frequenz des ersten Trägers sich von einer Frequenz des zweiten Trägers signifikant unterscheidet, der erste Träger ein Uplink-Träger des Endgeräts ist und der zweite Träger ein Zeitduplex(time division duplex - TDD)-Träger oder ein Downlink-Träger des Endgeräts, der ein Referenzsignal umfasst, ist;
Bestimmen (503, 605) einer Leistung zum Senden eines Uplink-Signals auf dem ersten Träger basierend auf einer Empfangsleistung zum Empfangen eines Downlink-Signals auf dem zweiten Träger und dem ersten Versatzwert durch das Endgerät,
wenn die Empfangsleistung zum Empfangen des Downlink-Signals auf dem zweiten Träger durch das Endgerät kleiner als oder gleich einer ersten Schwelle ist; oder
wenn eine Streckendämpfung zum Empfangen des Downlink-Signals auf dem zweiten Träger durch das Endgerät kleiner als oder gleich einer zweiten Schwelle ist; oder
wenn eine Referenzsignalempfangsleistung (reference signal received power-RSRP) zum Empfangen des Downlink-Signals auf dem zweiten Träger durch das Endgerät kleiner als oder gleich einer dritten Schwelle ist.

**2.** Leistungsbestimmungsverfahren nach Anspruch 1, wobei das Bestimmen der Leistung zum Senden eines Uplink-Signals auf dem ersten Träger basierend auf der Empfangsleistung zum Empfangen eines Downlink-Signals auf dem zweiten Träger und dem ersten Versatzwert durch das Endgerät Folgendes umfasst:
Bestimmen der Leistung zum Senden des Uplink-Signals auf dem ersten Träger basierend auf der Streckendämpfung auf dem zweiten Träger und dem ersten Versatzwert durch das Endgerät, wobei die Streckendämpfung auf dem zweiten Träger durch das Endgerät basierend auf der Empfangsleistung zum Empfangen des Downlink-Signals auf dem zweiten Träger bestimmt wird.

**3.** Leistungsbestimmungsverfahren nach Anspruch 2, wobei das Bestimmen der Leistung zum Senden des Uplink-Signals auf dem ersten Träger basierend auf der Streckendämpfung auf dem zweiten Träger und dem ersten Versatzwert durch das Endgerät Folgendes umfasst:
Bestimmen einer Streckendämpfung auf dem ersten Träger basierend auf der Streckendämpfung auf dem zweiten Träger und dem ersten Versatzwert durch das Endgerät und Bestimmen der Leistung zum Senden des Uplink-Signals auf dem ersten Träger basierend auf der Streckendämpfung auf dem ersten Träger.

**4.** Leistungsbestimmungsverfahren nach Anspruch 3, wobei das Bestimmen einer Streckendämpfung auf dem ersten Träger basierend auf der Streckendämpfung auf dem zweiten Träger und dem ersten Versatzwert durch das Endgerät Folgendes umfasst:

Verwenden eines Ergebnisses, das durch Addieren der Streckendämpfung auf dem zweiten Träger, des ersten Versatzwerts und eines zweiten Versatzwerts erhalten wird, als die Streckendämpfung auf dem ersten Träger durch das Endgerät, wobei
der zweite Versatzwert basierend auf der Streckendämpfung auf dem ersten Träger und der Streckendämpfung auf dem zweiten Träger bestimmt wird.

5. Leistungsbestimmungsverfahren nach Anspruch 3, wobei das Bestimmen einer Streckendämpfung auf dem ersten Träger basierend auf der Streckendämpfung auf dem zweiten Träger und dem ersten Versatzwert durch das Endgerät Folgendes umfasst:
Verwenden eines Ergebnisses, das durch Addieren der Streckendämpfung auf dem zweiten Träger und des ersten Versatzwerts erhalten wird, als die Streckendämpfung auf dem ersten Träger durch das Endgerät.

6. Leistungsbestimmungsverfahren nach Anspruch 2, wobei das Bestimmen der Leistung zum Senden eines Uplink-Signals auf dem ersten Träger basierend auf der Streckendämpfung auf dem zweiten Träger und dem ersten Versatzwert durch das Endgerät Folgendes umfasst:
die Leistung $P$ zum Senden des Uplink-Signals auf dem ersten Träger durch das Endgerät erfüllt die folgende Formel:

$$P = \min\{P_{max}, FUNKTION\ (M, P_0, \Delta, f) + \alpha \cdot PL + Versatz\},$$

wobei

*Versatz* der erste Versatzwert ist;
*PL* basierend auf der Streckendämpfung auf dem zweiten Träger bestimmt wird, *PL* die Streckendämpfung auf dem zweiten Träger ist oder *PL* ein Ergebnis, das durch Addieren der Streckendämpfung auf dem zweiten Träger und eines zweiten Versatzwerts erhalten wird, ist, die Streckendämpfung auf dem zweiten Träger durch das Endgerät basierend auf der Empfangsleistung zum Empfangen des Downlink-Signals auf dem zweiten Träger bestimmt wird und der zweite Versatzwert basierend auf einer Streckendämpfung auf dem ersten Träger und der Streckendämpfung auf dem zweiten Träger bestimmt wird;
$P_{max}$ eine maximale Übertragungsleistung des Endgeräts auf dem ersten Träger ist;
*FUNKTION* ($M, P_0, \Delta, f$) eine Funktion, die sich auf M, $P_0, \Delta, f$ bei einer Uplink-Leistungssteuerung bezieht, ist, M eine Anzahl von Ressourcenblöcken, die durch das Endgerät belegt werden, um das Uplink-Signal auf dem ersten Träger zu senden, ist, $P_0$ ein Leistungssteuerungsparameter, der sich auf eine Zielempfangsleistung bezieht und der durch das Endgerät von der Netzwerkvorrichtung erhalten wird, ist, $\Delta$ ein Leistungssteuerungsparameter, der sich auf ein Codierungs- und Modulationsschema bezieht und der durch das Endgerät von der Netzwerkvorrichtung erhalten wird, ist und fein Leistungssteuerungsparameter, der sich auf einen Leistungsbefehl bezieht und der durch das Endgerät von der Netzwerkvorrichtung erhalten wird, ist; und
$\alpha$ ein Leistungssteuerungsparameter, der sich auf eine Streckendämpfungskompensation bezieht und der durch das Endgerät von der Netzwerkvorrichtung erhalten wird, ist.

7. Leistungsbestimmungsverfahren nach Anspruch 2, wobei das Bestimmen der Leistung zum Senden des Uplink-Signals auf dem ersten Träger basierend auf der Streckendämpfung auf dem zweiten Träger und dem ersten Versatzwert durch das Endgerät Folgendes umfasst:
die Leistung $P$ zum Senden des Uplink-Signals auf dem ersten Träger durch das Endgerät erfüllt die folgende Formel:

$$P = \min\ \{P_{max}, FUNKTION\ (M, P_0, \Delta, f) + \alpha \cdot PL + \alpha \cdot Versatz\},$$

wobei

*Versatz* der erste Versatzwert ist;
*PL* basierend auf der Streckendämpfung auf dem zweiten Träger bestimmt wird, *PL* die Streckendämpfung auf dem zweiten Träger ist oder *PL* ein Ergebnis, das durch Addieren der Streckendämpfung auf dem zweiten Träger und eines zweiten Versatzwerts erhalten wird, ist, die Streckendämpfung auf dem zweiten Träger durch das Endgerät basierend auf der Empfangsleistung zum Empfangen des Downlink-Signals auf dem zweiten Träger bestimmt wird und der zweite Versatzwert basierend auf einer Streckendämpfung auf dem ersten Träger und der Streckendämpfung auf dem zweiten Träger bestimmt wird;
$P_{max}$ die maximale Übertragungsleistung des Endgeräts auf dem ersten Träger ist;
*FUNKTION* ($M, P_0, \Delta, f$) eine Funktion, die sich auf $M, P_0, \Delta, f$ bei der Uplink-Leistungssteuerung bezieht, ist, M eine Anzahl von Ressourcenblöcken, die durch das Endgerät belegt werden, um das Uplink-Signal auf dem ersten Träger zu senden, ist, $P_0$ ein Leistungssteuerungsparameter, der sich auf die Zielempfangsleistung bezieht und der durch das Endgerät von der Netzwerkvorrichtung erhalten wird, ist, $\Delta$ ein Leistungssteuerungsparameter, der sich auf ein Codierungs- und Modulationsschema bezieht und der durch das Endgerät von der Netzwerkvorrichtung erhalten wird, ist und fein Leistungssteuerungsparameter, der sich auf einen Leistungsbefehl bezieht und der durch das Endgerät von der Netzwerkvorrichtung erhalten wird, ist; und $\alpha$ ein Leistungssteuerungsparameter, der sich auf eine Streckendämpfungskompensation bezieht und der durch das Endgerät von der Netzwerkvorrichtung erhalten wird, ist.

8. Leistungsbestimmungsverfahren nach einem der Ansprüche 1 bis 7, das ferner Folgendes umfasst:
Erhalten der ersten Schwelle, der zweiten Schwelle oder der dritten Schwelle von der Netzwerkvorrichtung durch das Endgerät.

9. Endgerät (UE), das Folgendes umfasst:

eine Empfangseinheit (71), die dazu konfiguriert ist, einen ersten Versatzwert von einer Netzwerkvorrichtung (gNB) zu empfangen, wobei der erste Versatzwert basierend auf einem Penetrationsverlust auf einem ersten Träger und einem Penetrationsverlust auf einem zweiten Träger bestimmt wird, eine Frequenz des ersten Trägers sich von einer Frequenz des zweiten Trägers signifikant unterscheidet, der erste Träger ein Uplink-Träger des Endgeräts ist und der zweite Träger ein Zeitduplex(TDD)-Träger oder ein Downlink-Träger des Endgeräts, der ein Referenzsignal umfasst, ist;
eine Bestimmungseinheit (72), die dazu konfiguriert ist, basierend auf der Empfangsleistung zum Empfangen eines Downlink-Signals auf dem zweiten Träger und dem ersten Versatzwert die Leistung zum Senden eines Uplink-Signals auf dem ersten Träger zu bestimmen,
wenn die Empfangsleistung zum Empfangen des Downlink-Signals auf dem zweiten Träger durch das Endgerät kleiner als oder gleich einer ersten Schwelle ist; oder
wenn eine Streckendämpfung zum Empfangen des Downlink-Signals auf dem zweiten Träger durch das Endgerät kleiner als oder gleich einer zweiten Schwelle ist; oder
wenn die Referenzsignalempfangsleistung (RSRP) zum Empfangen des Downlink-Signals auf dem zweiten Träger durch das Endgerät kleiner als oder gleich einer dritten Schwelle ist.

10. Endgerät nach Anspruch 9, wobei
die Bestimmungseinheit speziell dazu konfiguriert ist, basierend auf der Streckendämpfung auf dem zweiten Träger und dem ersten Versatzwert die Leistung zum Senden des Uplink-Signals auf dem ersten Träger zu bestimmen, wobei die Streckendämpfung auf dem zweiten Träger durch das Endgerät basierend auf der Empfangsleistung zum Empfangen des Downlink-Signals auf dem zweiten Träger bestimmt wird.

11. Leistungsbestimmungssystem, das das Endgerät (UE) nach einem der Ansprüche 9 bis 10 und die Netzwerkvorrichtung (gNB) umfasst, die eine Konfigurationseinheit (91), die dazu konfiguriert ist, einen ersten Versatzwerts für ein Endgerät zu konfigurieren, umfasst, wobei der erste Versatzwert basierend auf einem Penetrationsverlust auf einem ersten Träger und einem Penetrationsverlust auf einem zweiten Träger bestimmt wird, der erste Träger ein Uplink-Träger des Endgeräts ist und der zweite Träger ein Zeitduplex(TDD)-Träger oder ein Downlink-Träger des Endgeräts ist.

**Revendications**

1. Procédé de détermination de puissance, comprenant :

la réception (502, 602), par un terminal (UE), d'une première valeur de décalage en provenance d'un dispositif de réseau (gNB), la première valeur de décalage étant déterminée sur la base d'un affaiblissement de pénétration sur une première porteuse et d'un affaiblissement de pénétration sur une seconde porteuse, une fréquence de la première porteuse étant sensiblement différente d'une fréquence de la seconde porteuse, la première porteuse étant une porteuse de liaison montante du terminal, et la seconde porteuse étant une porteuse à duplexage par répartition dans le temps, TDD, ou une porteuse de liaison descendante du terminal comprenant un signal de référence ;
la détermination (503, 605), par le terminal sur la base de la puissance de réception pour la réception d'un signal de liaison descendante sur la seconde porteuse et de la première valeur de décalage, de la puissance pour l'envoi d'un signal de liaison montante sur la première porteuse,
lorsque la puissance de réception pour la réception du signal de liaison descendante sur la seconde porteuse par le terminal est inférieure ou égale à un premier seuil ; ou
lorsqu'un affaiblissement de propagation pour la réception du signal de liaison descendante sur la seconde porteuse par le terminal est inférieur ou égal à un deuxième seuil ; ou

lorsqu'une puissance reçue du signal de référence, RSRP, pour la réception du signal de liaison descendante sur la seconde porteuse par le terminal est inférieure ou égale à un troisième seuil.

2. Procédé de détermination de puissance selon la revendication 1, la détermination, par le terminal sur la base de la puissance de réception pour la réception d'un signal de liaison descendante sur la seconde porteuse et de la première valeur de décalage, de la puissance pour l'envoi d'un signal de liaison montante sur la première porteuse comprenant :
la détermination, par le terminal sur la base de l'affaiblissement de propagation sur la seconde porteuse et de la première valeur de décalage, de la puissance pour l'envoi du signal de liaison montante sur la première porteuse, l'affaiblissement de propagation sur la seconde porteuse étant déterminé par le terminal sur la base de la puissance de réception pour la réception du signal de liaison descendante sur la seconde porteuse.

3. Procédé de détermination de puissance selon la revendication 2, la détermination, par le terminal sur la base de l'affaiblissement de propagation sur la seconde porteuse et de la première valeur de décalage, de la puissance pour l'envoi du signal de liaison montante sur la première porteuse comprenant :
la détermination, par le terminal, d'un affaiblissement de propagation sur la première porteuse sur la base de l'affaiblissement de propagation sur la seconde porteuse et de la première valeur de décalage, et la détermination, sur la base de l'affaiblissement de propagation sur la première porteuse, de la puissance pour l'envoi du signal de liaison montante sur la première porteuse.

4. Procédé de détermination de puissance selon la revendication 3, la détermination, par le terminal, d'un affaiblissement de propagation sur la première porteuse sur la base de l'affaiblissement de propagation sur la seconde porteuse et de la première valeur de décalage comprenant :

l'utilisation, par le terminal, en tant qu'affaiblissement de propagation sur la première porteuse, d'un résultat obtenu en additionnant l'affaiblissement de propagation sur la seconde porteuse, la première valeur de décalage et une seconde valeur de décalage,
la seconde valeur de décalage étant déterminée sur la base de l'affaiblissement de propagation sur la première porteuse et de l'affaiblissement de propagation sur la seconde porteuse.

5. Procédé de détermination de puissance selon la revendication 3, la détermination, par le terminal, d'un affaiblissement de propagation sur la première porteuse sur la base de l'affaiblissement de propagation sur la seconde porteuse et de la première valeur de décalage comprenant :
l'utilisation, par le terminal, en tant qu'affaiblissement de propagation sur la première porteuse, d'un résultat obtenu en additionnant l'affaiblissement de propagation sur la seconde porteuse et la première valeur de décalage.

6. Procédé de détermination de puissance selon la revendication 2, la détermination, par le terminal sur la base de l'affaiblissement de propagation sur la seconde porteuse et de la première valeur de décalage, de la puissance pour l'envoi du signal de liaison montante sur la première porteuse comprenant :
le fait que la puissance $P$ pour l'envoi du signal de liaison montante sur la première porteuse par le terminal satisfait à la formule suivante :

$$P = \min\{P_{max}, FUNCTION\ (M, P_0, \Delta, f) + \alpha \cdot PL + offset\},$$

où

offset est la première valeur de décalage ;
$PL$ est déterminé sur la base de l'affaiblissement de propagation sur la seconde porteuse, $PL$ est l'affaiblissement de propagation sur la seconde porteuse ou $PL$ est un résultat obtenu en additionnant l'affaiblissement de propagation sur la seconde porteuse et une seconde valeur de décalage, l'affaiblissement de propagation sur la seconde porteuse est déterminé par le terminal sur la base de la puissance de réception pour la réception du signal de liaison descendante sur la seconde porteuse, et la seconde valeur de décalage est déterminée sur la base d'un affaiblissement de propagation sur la première porteuse et de l'affaiblissement de propagation sur la seconde porteuse ;
$P_{max}$ est la puissance d'émission maximale du terminal sur la première porteuse ;
$FUNCTION\ (M, P_0, \Delta, f)$ est une fonction liée à M, $P_0$, $\Delta$, $f$ dans la commande de puissance de liaison montante, M est une quantité de blocs de ressources occupée par le terminal pour envoyer le signal de liaison montante sur la première porteuse, $P_0$ est un paramètre de commande de puissance qui est lié à la puissance de réception cible et qui est obtenu par le terminal en provenance du dispositif de réseau, $\Delta$ est un paramètre de commande de puissance qui est lié à un plan de codage et de modulation et qui est obtenu par le terminal en provenance du dispositif de réseau, et $f$ est un paramètre de commande de puissance qui est lié à une commande de puissance et qui est obtenu par le terminal en provenance du dispositif de réseau ; et

$\alpha$ est un paramètre de commande de puissance lié à la compensation d'affaiblissement de propagation et qui est obtenu par le terminal en provenance du dispositif de réseau.

7. Procédé de détermination de puissance selon la revendication 2, la détermination, par le terminal sur la base de l'affaiblissement de propagation sur la seconde porteuse et de la première valeur de décalage, de la puissance pour l'envoi du signal de liaison montante sur la première porteuse comprenant :

le fait que la puissance $P$ pour l'envoi du signal de liaison montante sur la première porteuse par le terminal satisfait à la formule suivante :

$$P = \min \{P_{max}, FUNCTION\ (M, P_0, \Delta, f) + \alpha \cdot PL + \alpha \cdot offset\},$$

où

$offset$ est la première valeur de décalage ;

$PL$ est déterminé sur la base de l'affaiblissement de propagation sur la seconde porteuse, $PL$ est l'affaiblissement de propagation sur la seconde porteuse ou $PL$ est un résultat obtenu en additionnant l'affaiblissement de propagation sur la seconde porteuse et une seconde valeur de décalage, l'affaiblissement de propagation sur la seconde porteuse est déterminé par le terminal sur la base de la puissance de réception pour la réception du signal de liaison descendante sur la seconde porteuse, et la seconde valeur de décalage est déterminée sur la base d'un affaiblissement de propagation sur la première porteuse et de l'affaiblissement de propagation sur la seconde porteuse ;

$P_{max}$ est la puissance d'émission maximale du terminal sur la première porteuse ;

$FUNCTION\ (M, P_0, \Delta, f)$ est une fonction liée à M, $P_0$, $\Delta$, $f$ dans la commande de puissance de liaison montante, M est une quantité de blocs de ressources occupée par le terminal pour envoyer le signal de liaison montante sur la première porteuse, $P_0$ est un paramètre de commande de puissance qui est lié à la puissance de réception cible et qui est obtenu par le terminal en provenance du dispositif de réseau, $\Delta$ est un paramètre de commande de puissance qui est lié à un plan de codage et de modulation et qui est obtenu par le terminal en provenance du dispositif de réseau, et $f$ est un paramètre de commande de puissance qui est lié à une commande de puissance et qui est obtenu par le terminal en provenance du dispositif de réseau ; et

$\alpha$ est un paramètre de commande de puissance lié à la compensation d'affaiblissement de propagation et qui est obtenu par le terminal en provenance du dispositif de réseau.

8. Procédé de détermination de puissance selon l'une quelconque des revendications 1 à 7, comprenant en outre :

l'obtention, par le terminal, du premier seuil, du deuxième seuil ou du troisième seuil en provenance du dispositif de réseau.

9. Terminal (UE), comprenant :

une unité de réception (71), configurée pour recevoir une première valeur de décalage en provenance d'un dispositif de réseau (gNB), la première valeur de décalage étant déterminée sur la base d'un affaiblissement de pénétration sur une première porteuse et d'un affaiblissement de pénétration sur une seconde porteuse, une fréquence de la première porteuse étant sensiblement différente d'une fréquence de la seconde porteuse, la première porteuse étant une porteuse de liaison montante du terminal, et la seconde porteuse étant une porteuse à duplexage par répartition dans le temps, TDD, ou une porteuse de liaison descendante du terminal comprenant un signal de référence ;

une unité de détermination (72), configurée pour déterminer, sur la base de la puissance de réception pour la réception d'un signal de liaison descendante sur la seconde porteuse et de la première valeur de décalage, de la puissance pour l'envoi d'un signal de liaison montante sur la première porteuse

lorsque la puissance de réception pour la réception du signal de liaison descendante sur la seconde porteuse par le terminal est inférieure ou égale à un premier seuil ; ou

lorsqu'un affaiblissement de propagation pour la réception du signal de liaison descendante sur la seconde porteuse par le terminal est inférieur ou égal à un deuxième seuil ; ou

lorsqu'une puissance reçue du signal de référence, RSRP, pour la réception du signal de liaison descendante sur la seconde porteuse par le terminal est inférieure ou égale à un troisième seuil.

10. Terminal selon la revendication 9,
l'unité de détermination étant spécifiquement configurée pour déterminer, sur la base de l'affaiblissement de propagation sur la seconde porteuse et de la première valeur de décalage, la puissance pour l'envoi du signal de liaison montante sur la première porteuse, l'affaiblissement de propagation sur la seconde porteuse étant déterminée par le terminal sur la base sur la puissance de réception pour la réception du signal de liaison descendante sur la seconde porteuse.

11. Système de détermination de puissance, comprenant le terminal (UE) selon l'une quelconque des revendications 9 à 10 et le dispositif de réseau (gNB) comprenant une unité de configuration (91), configurée pour configurer une première valeur de décalage pour un terminal, la première valeur de décalage étant déterminée sur la base d'un affaiblissement de pénétration sur une première porteuse et d'un affaiblissement de pénétration sur une seconde porteuse, la première porteuse étant une porteuse de liaison montante du terminal, et la seconde porteuse étant une porteuse à duplexage par répartition dans le temps, TDD, ou une porteuse de liaison descendante du terminal.

F2

NR TDD

F3

LTE TDD

F1

| LTE UL | NR UL | NR UL | LTE UL |

FIG. 1

Network device

Uplink carrier

Uplink carrier

Downlink carrier

Downlink carrier

Terminal

Terminal

FIG. 2

31

35

Processor

CPU 0

CPU 1

Processor

CPU 0

CPU 1

32

Communications
bus 34

Memory

33

Communications
interface

Receiving unit

Sending unit

FIG. 3

41

Processor

CPU 0

CPU 1

44

Processor

CPU 0

CPU 1

42

Memory

43

Transceiver

Receiving unit

Sending unit

FIG. 4

UE

gNB

501. The gNB configures a first
offset value for the UE

502. The UE receives the first offset
value from the gNB

503. The UE determines, based on
receive power for receiving a downlink
signal on a second carrier and the first
offset value, power for sending an
uplink signal on a first carrier

FIG. 5

| UE | | gNB |

601. The gNB configures a first offset value and a first threshold for the UE

602. The UE receives the first offset value and the first threshold from the gNB

603. The UE compares receive power for receiving a downlink signal on a second carrier with the first threshold, and performs step 604 when the receive power for receiving the downlink signal on the second carrier by the UE is less than or equal to the first threshold, or performs step 605 when the receive power for receiving the downlink signal on the second carrier by the UE is greater than the first threshold

604. The UE determines, based on the receive power for receiving the downlink signal on the second carrier and the first offset value, power for sending an uplink signal on a first carrier

605. The UE determines, based on the receive power for receiving the downlink signal on the second carrier, power for sending an uplink signal on a first carrier

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710459417
- US 2013142113 A1